(19) Europäisches Patentamt
European Patent Office
Office européen des brevets

(11) **EP 2 288 013 A1**

(12) **DEMANDE DE BREVET EUROPEEN**

(43) Date de publication:
**23.02.2011 Bulletin 2011/08**

(51) Int Cl.:
*H02M 7/523* (2006.01)          *H02M 7/5387* (2007.01)
*B23K 9/10* (2006.01)

(21) Numéro de dépôt: **10167312.7**

(22) Date de dépôt: **25.06.2010**

(84) Etats contractants désignés:
**AL AT BE BG CH CY CZ DE DK EE ES FI FR GB GR HR HU IE IS IT LI LT LU LV MC MK MT NL NO PL PT RO SE SI SK SM TR**
Etats d'extension désignés:
**BA ME RS**

(30) Priorité: **01.07.2009 FR 0954493**

(71) Demandeurs:
• **L'Air Liquide Société Anonyme pour l'Etude et l'Exploitation des Procédés Georges Claude**
**75007 Paris (FR)**

• **Air Liquide Welding France**
**75007 Paris (FR)**

(72) Inventeur: **Coulibaly, Peyofougou**
**95310 Saint-Ouen L'Aumone (FR)**

(74) Mandataire: **Pittis, Olivier**
**L'Air Liquide, S.A.,**
**Direction de la Propriété Intellectuelle,**
**75, Quai d'Orsay**
**75321 Paris Cedex 07 (FR)**

(54) **Poste de soudage à l'arc à onduleur multiniveaux à commutation douce quasi résonant**

(57)     Onduleur de type multiniveaux, à commutation douce quasi-résonante, comprenant :
- une source d'alimentation ;
- au moins deux cellules de commutation comprenant chacune deux interrupteurs ;
- un pôle de commutation passif et un pôle de commutation actif ;
- un diviseur de tension connecté en parallèle avec ladite source d'alimentation;

**caractérisé en ce que :**
- lesdites cellules de commutation sont imbriquées.

Fig.1

EP 2 288 013 A1

**Description**

La présente invention concerne une source de puissance à onduleur de type multi niveaux à commutation douce et un poste de soudage à l'arc comportant cet onduleur, ainsi qu'un procédé de contrôle de la puissance délivrée par cet onduleur ou ce poste de soudage.

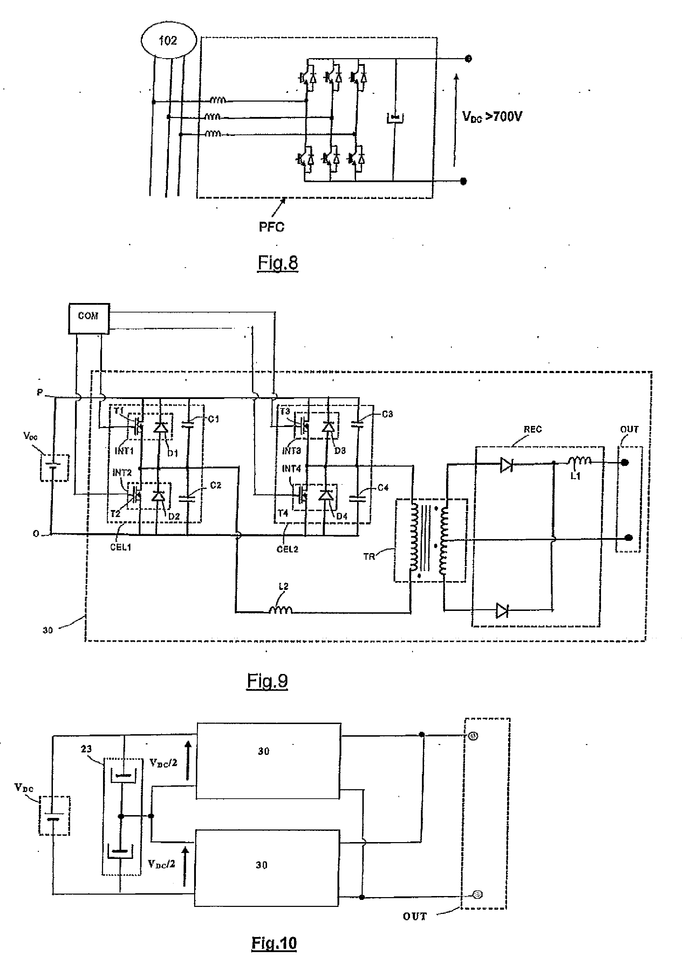

Afin de respecter certaines normes sur les émissions de courants harmoniques sur le réseau électrique (par exemple CEI 60974-10:2007, CEI 61000-3-2), des circuits spécifiques sont souvent intégrés dans les postes de soudage entre le réseau d'alimentation et le ou les onduleurs. Il peut s'agir typiquement de convertisseurs PFC (Power Factor Corrector), tel que représenté à la figure 8, ou de ponts à diodes. Or le bus de tension continu délivré à l'onduleur par ces circuits intermédiaires est relativement élevé, en général supérieur à 700V pour un réseau à 400V, ce qui nécessite certaines adaptations du ou des onduleurs connectés en aval.

Une solution classique, illustrée à la figure 10, consiste à appliquer cette tension à plusieurs onduleurs de l'état de la technique montés en série, de sorte que chacun voit une tension acceptable. Cette solution est coûteuse en raison du nombre de composants nécessaires et de sa complexité. En outre, l'équilibre en tension des onduleurs est délicat à réaliser.

Une autre solution consiste à modifier l'onduleur de façon à le rendre adapté à une tension d'alimentation plus élevée. Dans une première variante, on utilise des composants de calibre élevé (1200V par exemple), mais ils sont à la fois moins performants et plus coûteux que les composants de plus bas calibre.

Dans une seconde variante, on évite ces composants de fort calibre en mettant en série plusieurs composants de bas calibre (600V par exemple), qui répondent individuellement mieux en fréquence et en chute de tension. Ce montage en série crée une contrainte particulière. En effet, s'ils étaient montés en parallèle, les interrupteurs de l'onduleur pourraient supporter des surintensités passagères (notion de courant maximum admissible durant un certain temps), alors que, montés en série, ils sont exposés à des surtensions risquant d'entraîner leur destruction. Il faut assurer un équilibrage des tensions aussi bien en régime statique (état bloqué) qu'en régime dynamique (phase d'amorçage et de blocage).

Plusieurs solutions sont présentées dans la littérature : mise en série avec des commandes synchrones, structures multi niveaux clampées par le neutre, structures multi cellulaires, structures à convertisseurs cascadés... etc. Cependant, ces agencements de circuits ne sont pas adaptés au domaine du soudage. En effet, soit ils ne permettent pas un isolement galvanique, soit ils occasionnent des pertes d'énergie importantes.

Un but de la présente invention est de pallier tout ou partie des inconvénients de l'art antérieur mentionnés ci-dessus, c'est à dire en particulier de fournir :

- un onduleur avec un isolement galvanique haute fréquence, un équilibrage parfait des tensions aux bornes des composants, en particulier les interrupteurs, des pertes énergétiques globales réduites, et une fiabilité accrue ;
- un poste de soudage à l'arc comportant un tel onduleur ;
- un procédé de contrôle de la puissance délivrée par un tel onduleur ou un tel poste de soudage.

L'invention concerne un onduleur de type multi niveaux, à commutation douce quasi-résonante, comprenant :

- des moyens de raccordement à une source d'alimentation en énergie électrique ;
- une première cellule de commutation comportant un premier et un second interrupteur et une seconde cellule de commutation comportant un troisième et un quatrième interrupteur, lesdits quatre interrupteurs étant commandés par des dispositifs délivrant des signaux suivant une logique à thyristor dual ;
- un dispositif de transformation de tension ;
- un pôle de commutation passif associé à ladite première cellule de commutation ;
- un pôle de commutation actif associé à ladite seconde cellule de commutation ; et
- un diviseur de tension connecté en parallèle avec ladite source d'alimentation et comprenant au moins deux éléments capacitifs en série définissant un premier point milieu ;
  **caractérisé en ce que** ladite source d'alimentation est connectée à une borne dudit premier interrupteur, lui-même connecté en série par son autre borne constituant un second point milieu audit quatrième interrupteur, lui-même connecté en série par un troisième point milieu audit troisième interrupteur, lui-même connecté en série par un quatrième point milieu à une borne dudit second interrupteur, lui-même connecté par son autre borne à ladite source d'alimentation.

L'onduleur est dit « multi niveaux », car il associe en série des interrupteurs, afin de réduire la tension de blocage lorsque ceux-ci sont alimentés en tension élevée. Il délivre trois niveaux de tension grâce à imbrication de deux cellules de commutation, soit quatre interrupteurs.

La commutation douce quasi-résonante est obtenue par la mise en oeuvre d'éléments réactifs (condensateurs, inductances...) de taille réduite (contrairement aux convertisseurs à résonance complète). Elle permet de réduire les pertes qui apparaissent lors des commutations d'amorçage et de blocage des interrupteurs.

En soudage, pour des raisons de sécurité, le dispositif de transformation (transformateur) est indispensable afin de baisser la tension à des niveaux conformes aux normes de sécurité et d'assurer un isolement galvanique entre l'entrée et la sortie du poste de soudage. Afin de réduire l'encombrement, ce dispositif de transformation peut-être inséré dans un étage alternatif haute fréquence créé par l'onduleur.

Les pôles dont il est question ci-dessus sont des circuits auxiliaires destinés à faciliter la commutation des cellules de commutation. Un pôle est normalement associé à une cellule de commutation. Leur rôle est de fournir un courant supplémentaire aux interrupteurs principaux de ces cellules permettant une commutation douce, c'est à dire un fonctionnement sans pertes dans les interrupteurs lors des phases d'amorçage ou de blocage.

Dans le pôle dit « passif », les éléments sont non-commandés et peuvent être notamment des condensateurs, des inductances, des résistances, des transformateurs... etc. Le courant qui les parcourt n'est pas contrôlé et le pôle débite du courant en permanence dans les interrupteurs principaux des cellules de commutation.

Dans le pôle dit « actif », le courant délivré par le pôle est contrôlé. Il peut comporter des éléments passifs du même type que ceux du pôle passif, mais surtout des éléments commandés tels que des interrupteurs. Il peut comporter d'autres éléments commandés. Le pôle actif fournit du courant uniquement au moment de la phase de commutation des interrupteurs principaux de la cellule de commutation concernée. On réduit ainsi les pertes supplémentaires dans les interrupteurs, au prix d'une augmentation de la complexité du pôle de commutation.

Dans l'onduleur selon l'invention, la première cellule de commutation a besoin d'un courant relativement faible pour commuter ; un pôle passif est donc suffisant et les pertes restent limitées. Par contre, la seconde cellule peut nécessiter un courant important pour commuter du fait d'une dissymétrie dans la commande des cellules de commutation caractérisée par une commande par déphasage des deux cellules l'une par rapport à l'autre. Le pôle actif permet alors d'éviter des pertes d'énergie trop importantes.

Les interrupteurs des cellules de commutations sont montés en série autour de la source d'alimentation, de sorte que la seconde cellule de commutation est imbriquée dans la première. On définit en outre quatre « points milieu » utiles pour définir le branchement des pôles de commutation et du dispositif d'équilibrage des tensions, ainsi que pour définir la connexion avec le transformateur. Au milieu du diviseur de tension se trouve un premier point milieu. Les premier et quatrième interrupteurs sont connectés par l'intermédiaire d'un second point milieu. Les quatrième et troisième interrupteurs sont connectés par l'intermédiaire d'un troisième point milieu. Enfin, les second et troisième interrupteurs sont connectés par l'intermédiaire d'un quatrième point milieu.

Selon des aspects particuliers de la présente invention, celle-ci peut présenter l'une ou plusieurs des caractéristiques suivantes :

-   ledit onduleur comporte un dispositif d'équilibrage comprenant au moins un condensateur flottant et connecté à au moins deux points pris parmi lesdits premier, second et quatrième points milieu.

-   ledit pôle de commutation passif est connecté aux premier, second et quatrième points milieu.

-   ledit pôle de commutation actif est connecté aux second, troisième et quatrième points milieu.

-   lesdits premier et troisième points milieu sont connectés avec ledit dispositif de transformation de tension.

-   ledit pôle de commutation passif comporte :

    -   un diviseur capacitif comprenant deux éléments capacitifs disposés en série entre lesdits second et quatrième points milieu ;
    -   une borne intermédiaire d'alimentation prise entre ces deux éléments capacitifs, reliée audit premier point milieu par l'intermédiaire d'un élément inductif et dont le potentiel varie entre zéro et les potentiels desdits second et quatrième points milieu ; et
    -   deux diodes montées en série entre lesdits second et quatrième points milieu et en parallèle avec chaque élément capacitif.

-   ledit pôle de commutation actif comporte :

    -   un diviseur capacitif formé de deux éléments capacitifs, disposés en série entre lesdits second et quatrième points milieu ;
    -   une borne intermédiaire d'alimentation prise entre ces deux éléments capacitifs et reliée audit troisième point milieu par l'intermédiaire d'un élément inductif en série avec un montage tête-bêche d'un premier et d'un second interrupteurs connectés à un premier et un second dispositifs de commande ; et

- deux diodes montées en série entre lesdits second et quatrième points milieu et en parallèle avec chaque élément capacitif.

- ledit dispositif d'équilibrage comprenant au moins un condensateur flottant comprend au moins deux diodes et est connecté au moins aux premier, second et quatrième points milieu.

- lesdits dispositifs de commande des interrupteurs des cellules de commutation comportent chacun :

  - un dispositif de commande délivrant des signaux de commande correspondant à des ordres d'amorçage ou de blocage ;
  - un circuit de détection de la tension entre les électrodes de puissance de chaque interrupteur délivrant des signaux de tension à deux états logiques comprenant un état haut correspondant à une tension entre les électrodes de puissance sensiblement nulle et un état bas correspondant à une tension sensiblement différente de zéro, et
  - un circuit de pilotage recevant lesdits signaux de commande et de tension et délivrant à chacun des interrupteurs des cellules de commutation un signal de pilotage correspondant à un ordre de blocage lorsque ledit signal de commande correspond à un ordre de blocage et/ou lorsque la tension entre les électrodes de puissance est sensiblement différente de zéro, ou correspondant à une autorisation d'amorçage lorsque ledit signal de commande correspond à un ordre d'amorçage et que la tension entre les électrodes de puissance est sensiblement nulle.

- lesdits interrupteurs des cellules de commutation sont de type MOSFET et pilotés en mode thyristor dual et que les interrupteurs dudit pôle de commutation actif sont de type IGBT et pilotés en mode thyristor.

- un élément capacitif est connecté en parallèle de chacun des interrupteurs des cellules de commutation et que les deux interrupteurs de chaque cellule de commutation sont commandés de manière complémentaire l'un par rapport à l'autre et sans temps mort.

- lesdits dispositifs de commande des interrupteurs de ladite première cellule de commutation délivrent des signaux de commande en avance d'une durée donnée par rapport aux signaux délivrés par le dispositif de commande des interrupteurs de ladite seconde cellule de commutation.

- les dispositifs de commande dudit pôle de commutation actif et les dispositifs de commande des interrupteurs de ladite seconde cellule de commutation délivrent des signaux de commande synchronisés de la manière suivante :

  - l'ordre d'amorçage transmis par ledit premier dispositif de commande dudit premier interrupteur du pôle de commutation actif est en avance d'une durée donnée, ou temps d'avance, sur l'ordre de blocage transmis par ledit dispositif de commande dudit quatrième interrupteur ;
  - la durée du signal de commande dudit premier interrupteur du pôle de commutation actif est supérieure ou égale à deux fois ledit temps d'avance, et inférieure à une demi-période de fonctionnement ;
  - l'ordre d'amorçage transmise par le dispositif de commande dudit second interrupteur du pôle de commutation actif est également en avance d'une durée égale audit temps d'avance sur l'ordre de blocage transmise par ledit dispositif de commande dudit troisième interrupteur ; et
  - la durée du signal de commande dudit second interrupteur du pôle de commutation actif est supérieure ou égale à deux fois ledit temps d'avance et inférieure à une demi-période de fonctionnement.

Le pôle passif aide à la commutation de la première cellule de commutation ; il vient se brancher sur les premier, second et quatrième points milieu. Le pôle actif aide à la commutation de la seconde cellule de commutation ; il vient se brancher sur les second, troisième et quatrième points milieu.

Le dispositif d'équilibrage comprend au moins un condensateur flottant et est connecté en général aux deuxième et quatrième points milieu. Il peut comporter d'autres éléments, notamment des diodes et être connecté également au premier point milieu. Son rôle est d'assurer une bonne répartition des tensions aux bornes des interrupteurs des deux cellules de commutation. Ainsi, chaque interrupteur supporte la moitié de la tension totale d'alimentation. Il s'agit d'un équilibrage statique et dynamique des tensions et courants de tous les composants de l'onduleur.

Les interrupteurs MOSFET des cellules de commutation sont pilotés en mode thyristor dual, c'est-à-dire que leur blocage est commandé et leur amorçage est spontané à tension nulle, ou mode ZVS (Zero Voltage Switching). Les interrupteurs IGBT du pôle de commutation actif sont pilotés en mode thyristor, c'est-à-dire que leur amorçage est commandé et leur blocage est spontané à courant nul, ou mode ZCS (Zero Current Switching).

Les signaux de commande (LTD) des interrupteurs (TD) d'une même cellule sont complémentaires l'un de l'autre et sans temps mort entre eux. Ainsi, lorsque l'un des interrupteurs reçoit une commande d'amorçage correspondant à un signal de niveau haut, l'autre interrupteur complémentaire doit recevoir en même temps une commande de blocage correspondant à un signal de niveau bas et inversement. En aucun cas, les deux interrupteurs complémentaires ne sont amorcés ou bloqués en même temps.

Les signaux de commande des deux interrupteurs adjacents des deux cellules de commutation sont déphasés pour le réglage du transfert de puissance. Ainsi, les signaux LTD1 et LTD4 sont en général déphasés, de même que les signaux LTD2 et LTD3. En particulier, les signaux LTD1 et LTD2 sont typiquement en arrière de phase par rapport aux signaux LTD3 et LTD4.

Selon un autre aspect, l'invention concerne aussi un poste de soudage à l'arc, caractérisé en ce qu'il comporte au moins un onduleur tel que décrit ci-dessus.

Ce poste de soudage à l'arc peut en outre comporter les éléments suivants :

- une source de tension continue reliée audit au moins un onduleur dont les bornes de sortie forment des bornes de soudage ;
- un dispositif de commande associé ; et
- des moyens d'entrée d'une consigne de soudage reliés audit dispositif de commande dudit au moins un onduleur.

Selon un autre aspect, l'invention concerne un procédé de contrôle d'un onduleur ou d'un poste de soudage tels que décrits ci-dessus, délivrant une puissance donnée, **caractérisé en ce que** la puissance délivrée est augmentée ou diminuée, respectivement, en réduisant ou en augmentant, respectivement, l'avance des signaux de commande de la première cellule de commutation correspondant au pôle de commutation passif par rapport aux signaux de commande de la seconde cellule de commutation correspondant au pôle de commutation actif.

L'invention sera mieux comprise à la lecture de la description et des exemples suivants, qui ne sont pas limitatifs. Ils se réfèrent aux dessins annexés, sur lesquels :

- la Fig. 1 représente le schéma électrique d'un onduleur selon l'invention,
- les Fig. 2A à 2L ..représentent les différentes séquences du fonctionnement de l'onduleur décrit en référence à la figure 1 durant une demi-période,
- la Fig. 3 montre le chronogramme de commande des interrupteurs de l'onduleur durant le fonctionnement,
- la Fig. 4 décrit le principe du dispositif de commande des interrupteurs TD suivant une logique thyristor dual,
- les Fig. 5.A à 5.E représentent l'évolution de certains paramètres (tensions, courants) de l'onduleur en fonction du temps,

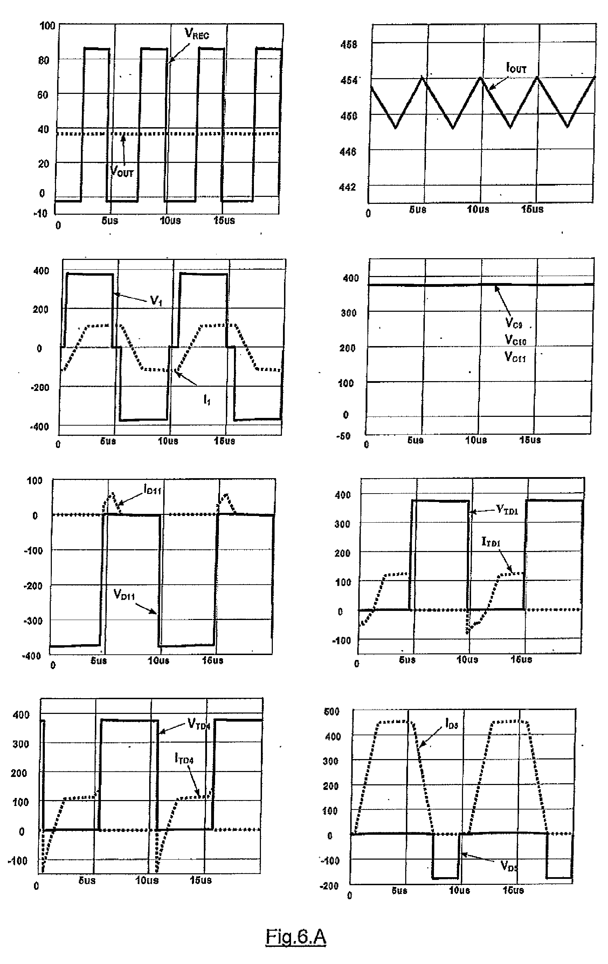

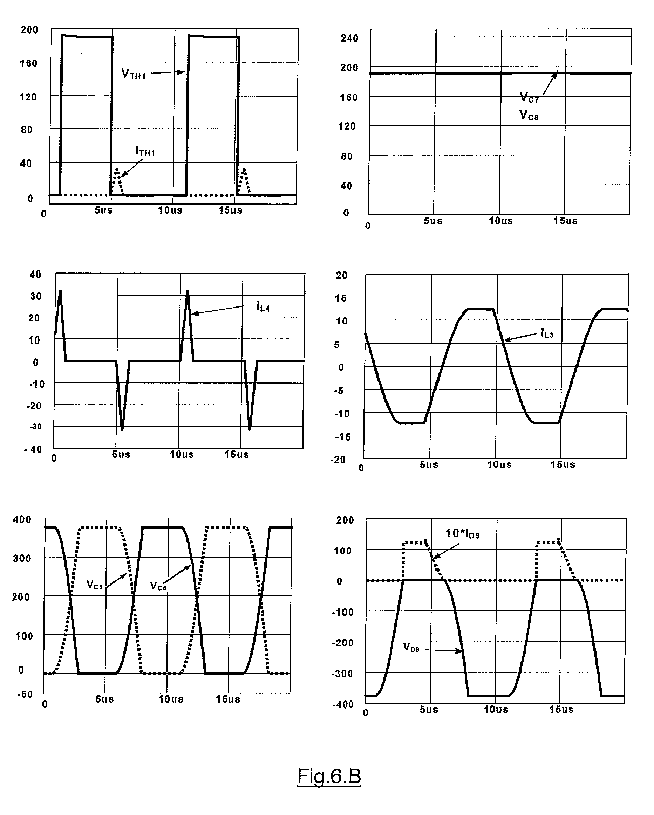

- les Fig.6.A et 6.B représentent l'évolution de certains paramètres (tensions, courants) de l'onduleur en fonction du temps suivant l'exemple de réalisation,
- la Fig. 7 représente un schéma synoptique d'un poste de soudage à onduleur selon l'invention,
- La Fig. 8 représente un circuit de type PFC (Power Correction Factor) branché sur le réseau d'alimentation et délivrant une tension $V_{DC}$,
- La Fig. 9 représente un onduleur de l'état de la technique,
- La Fig. 10 représente le montage de deux onduleurs de l'état de la technique en série.

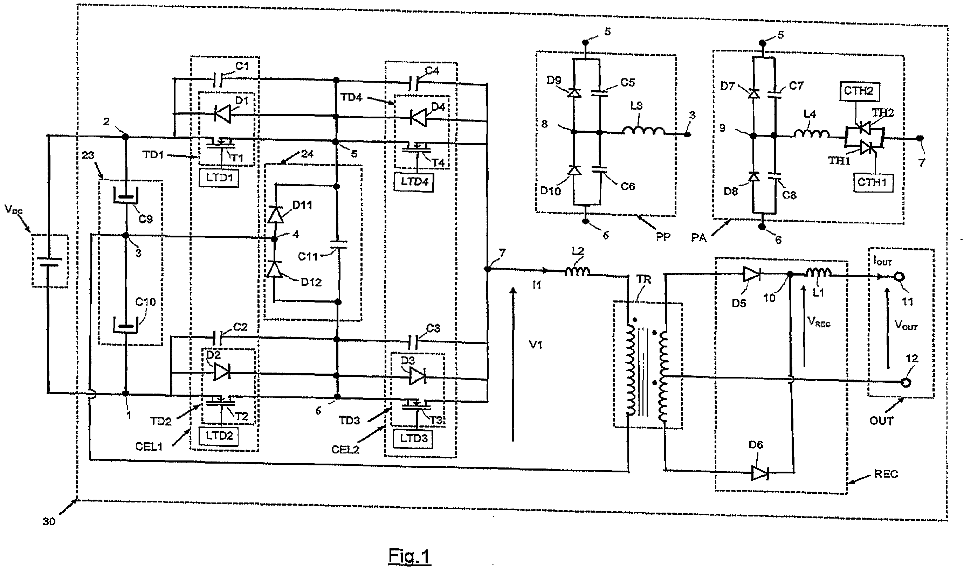

La Fig. 1 représente un exemple de circuit selon l'invention. L'onduleur 30 est raccordé entre les bornes 1 de référence et 2 d'alimentation de la source de tension continue $V_{DC}$, qui délivre une tension continue d'environ 750 Volts.

Le diviseur capacitif principal 23, constitué des éléments capacitifs C9 et C10 connectés en série, est branché entre les bornes 1 de référence et 2 d'alimentation de la source de tension continue $V_{DC}$.

L'onduleur 30 comporte deux cellules CEL1 et CEL2 imbriquées, comportant chacune deux interrupteurs, l'ensemble étant disposé en parallèle entre les bornes 1 et 2 d'alimentation. Ces interrupteurs sont désignés de manière générale par la référence TD et de manière particulière par les références TD1, TD2, TD3 et TD4. Chaque interrupteur TD est constitué d'un transistor et d'une diode en anti-parallèle de manière à constituer un interrupteur unidirectionnel en tension et bidirectionnel en courant. Ces transistors sont désignés de manière générale par la référence T et de manière particulière par les références T1, T2, T3 et T4 et les diodes en anti-parallèle sont désignées de manière générale par la référence D et de manière particulière par les références D1, D2, D3 et D4.

Les interrupteurs TD sont disposés en parallèle avec un élément capacitif C d'aide à la commutation, désignés de manière générale par la référence C et de manière particulière par les références C1, C2, C3 et C4, et formant élément de résonance. Dans l'exemple, les interrupteurs TD sont des interrupteurs de type dit MOSFET tels que par exemple les composants désignés IXFN70N60Q2 (600V/70A). Les éléments capacitifs C sont des capacités de 4.7 nF (nano-farads).

Les cellules de commutation CEL1 et CEL2 présentent des bornes de sortie 5 (point milieu entre les deux interrupteurs TD1 et TD4) et 6 (point milieu entre les interrupteurs TD2 et TD3), entre lesquelles est connecté le dispositif d'équilibrage de tension 24 constitué des diodes D11 et D12 et du condensateur flottant C11. Ce dispositif d'équilibrage est également connecté au point 3 situé au milieu du diviseur capacitif 23 constitué des condensateurs C9 et C10.

L'onduleur 30 comporte également un transformateur TR. Le primaire est relié aux sorties 3 du diviseur capacitif 23 et la borne de sortie 7 de la cellule de commutation CEL2. Le secondaire est relié à un redresseur à diodes REC délivrant une tension continue de sortie. Le transformateur TR est dans l'exemple un transformateur planar de 20 kW, cette technologie étant particulièrement adaptée aux applications à puissances et fréquences élevées. Un tel transformateur est classique dans le domaine de l'électronique de puissance et ne sera pas décrit plus en détail.

L'onduleur 30 comporte également un élément inductif L2 disposé en série entre la borne de sortie 7 de la seconde cellule de commutation CEL2 et le primaire du transformateur TR. Cet élément inductif L2 est un élément facultatif destiné à diminuer les perturbations électromagnétiques, grâce à son influence sur les taux de montée et de descente du courant au niveau du primaire. Eventuellement, cet élément inductif L2 est formé par l'inductance de fuite du transformateur TR. Dans l'exemple, cet élément inductif L2 est constitué de l'inductance de fuite du transformateur TR d'une valeur de 3 $\mu$H (micro-Henry).

Le secondaire du transformateur TR est relié à un redresseur REC de type classique utilisant des diodes DSEP 2x101 (400 volts de deux fois 100 A), et une inductance L1 de lissage du courant d'une valeur de 20 $\mu$H. Les bornes de sortie du redresseur REC forment directement les bornes de sortie de l'onduleur 30 et sont désignées par les références 11 et 12.

L'onduleur 30 comporte un pôle de commutation passif PP, constitué d'un diviseur capacitif formé de deux éléments capacitifs C5 et C6 disposés en série entre lesdites bornes d'alimentation 5 et 6 du condensateur flottant C11, ledit diviseur capacitif comportant une borne prise entre les deux éléments capacitifs et formant borne intermédiaire d'alimentation 8, ladite borne intermédiaire d'alimentation 8 étant reliée à la borne de sortie 3 du diviseur capacitif 23 par l'intermédiaire d'un élément inductif L3, et des diodes D9 et D10 montées en série entre les bornes d'alimentation 5 et 6, et en parallèle avec chaque élément capacitif C5 et C6. Dans l'exemple, les éléments capacitifs C5 et C6 sont des condensateurs de 22 nF ; l'élément L3 est une inductance de 40 $\mu$H et les diodes D9 et D10 sont de type BYT30P-1000 (30 A, 1000 V).

L'onduleur 30 comporte aussi un pôle de commutation actif PA, constitué d'un diviseur capacitif formé de deux éléments capacitifs C7 et C8 disposés en série entre lesdites bornes d'alimentation 5 et 6, ledit diviseur capacitif comportant une borne prise entre les deux éléments capacitifs et formant borne intermédiaire d'alimentation 9, ladite borne intermédiaire d'alimentation 9 étant reliée à la borne de sortie 7 de la deuxième cellule CEL2 par l'intermédiaire d'un élément inductif L4, disposé en série avec un montage tête-bêche de deux interrupteurs TH1 et TH2 commandés par un dispositif CTH composé des unités de commande CTH1 et CTH2, et des diodes D7 et D8 montées en série entre les bornes d'alimentation 5 et 6, et en parallèle avec chaque élément capacitif C7 et C8.

Grâce à l'adjonction des interrupteurs TH1 et TH2, le courant dans le pôle n'est délivré que lors des phases de commutation, ce qui permet de réduire les pertes par conduction dans les interrupteurs TD3 et TD4. Dans l'exemple, les éléments capacitifs C7 et C8 sont des condensateurs de 10 $\mu$F ; l'élément L4 est une inductance de 3 $\mu$H, les diodes D7 et D8 sont de type BYT30P-1000 ; les interrupteurs TH1 et TH2 sont des IGBT (600 V, 40 A) connectés en anti-série.

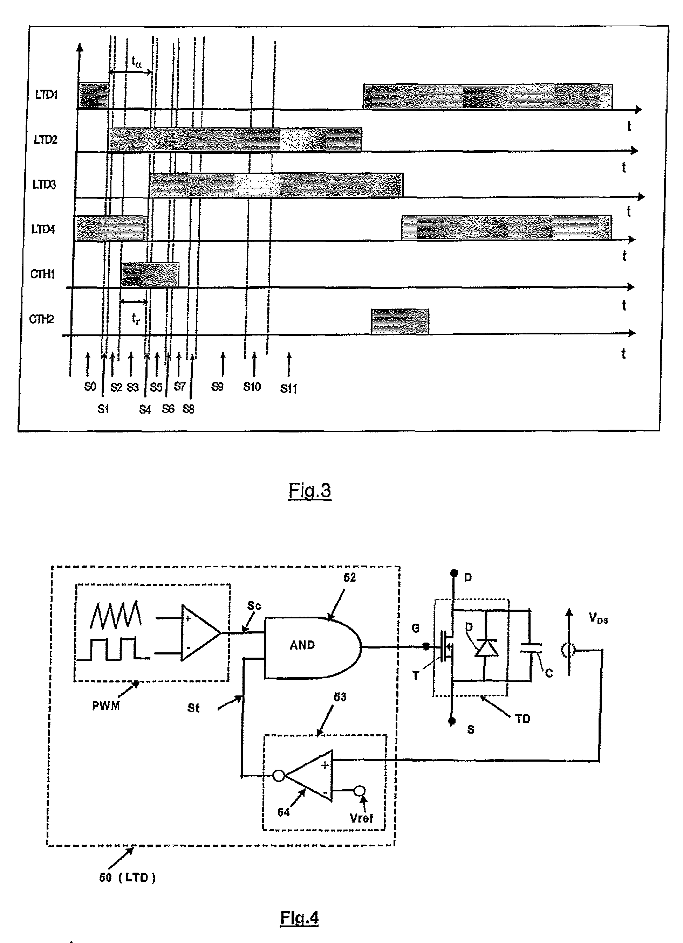

L'onduleur 30 comporte également un dispositif de commande LTD délivrant des signaux de commande aux interrupteurs TD correspondant à des ordres de blocage ou à des autorisations d'amorçage. Une telle commande est réalisée par un principe dit à « logique thyristor dual » et sera décrite plus en détails ultérieurement en référence à la figure 4.

L'onduleur 30 comporte en outre un dispositif de commande CTH délivrant des signaux de commande CTH1 et CTH2 aux interrupteurs TH1 et TH2 correspondant à des ordres d'amorçage ou de blocage, synchrones des signaux de commandes LTD3 et LTD4 du dispositif de commande LTD. Ces signaux sont adaptés pour délivrer des impulsions de courant destinées à faire commuter les interrupteurs TD3 et TD4 en mode zéro de tension (ZVS). Le principe de fonctionnement de cette commande est décrit ultérieurement.

Le circuit tel que décrit permet d'obtenir au niveau des bornes de sortie 11 et 12, à l'aide d'une commande de fonctionnement à 100 kHz de type blocage commandé et amorçage spontané, une tension de 0 à 50 volts et un courant de 0 à 500 ampères. Les pôles de commutation permettent d'obtenir l'amorçage spontané des interrupteurs TD sans limite inférieure de courant.

Par ailleurs, les composants utilisés, notamment dans l'onduleur, peuvent être réalisés de plusieurs manières différentes.

Les interrupteurs TD peuvent être formés de manière classique d'un ou plusieurs transistors MOSFET identiques placés en parallèle, de sorte que les interrupteurs dans leur ensemble sont unidirectionnels en tension et bidirectionnels en courant. Les éléments capacitifs C peuvent être formés de plusieurs condensateurs disposés en parallèle. Le nombre et la nature de chacun des composants électroniques utilisés, varient en fonction de la puissance maximale que doit délivrer l'onduleur.

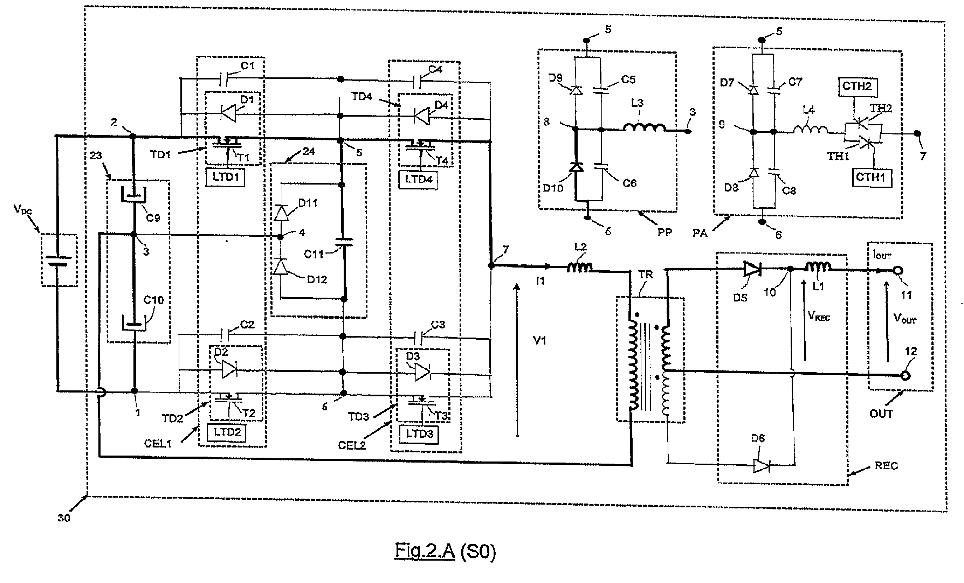

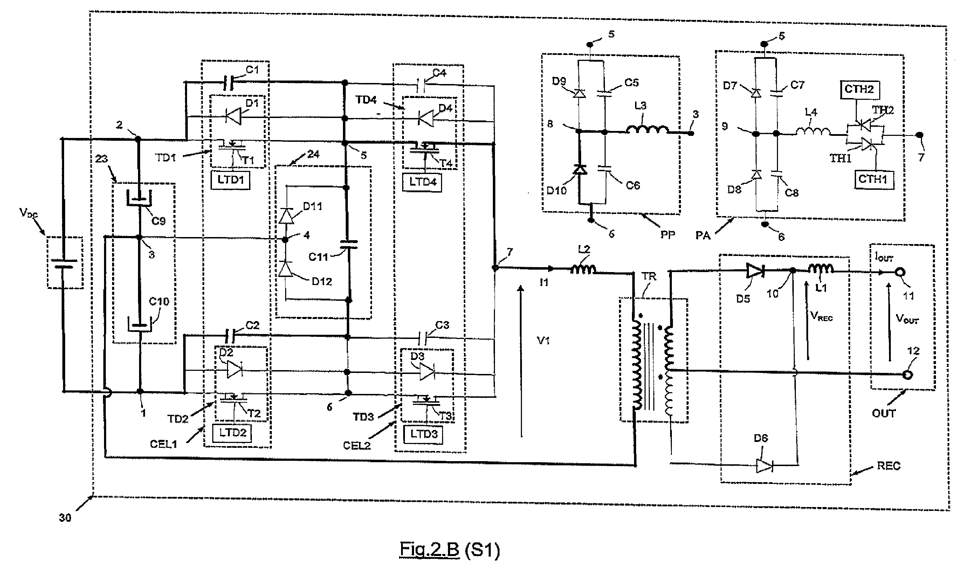

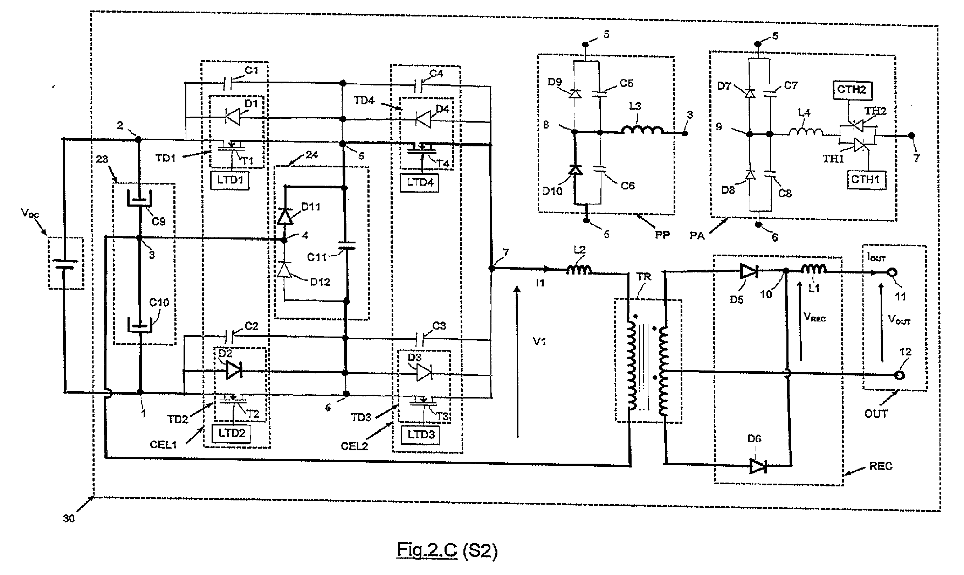

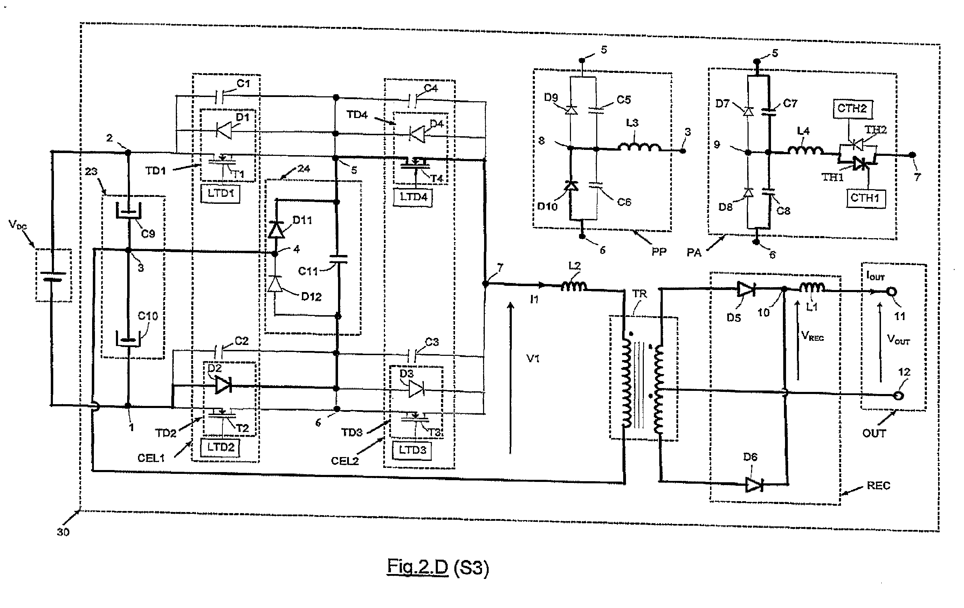

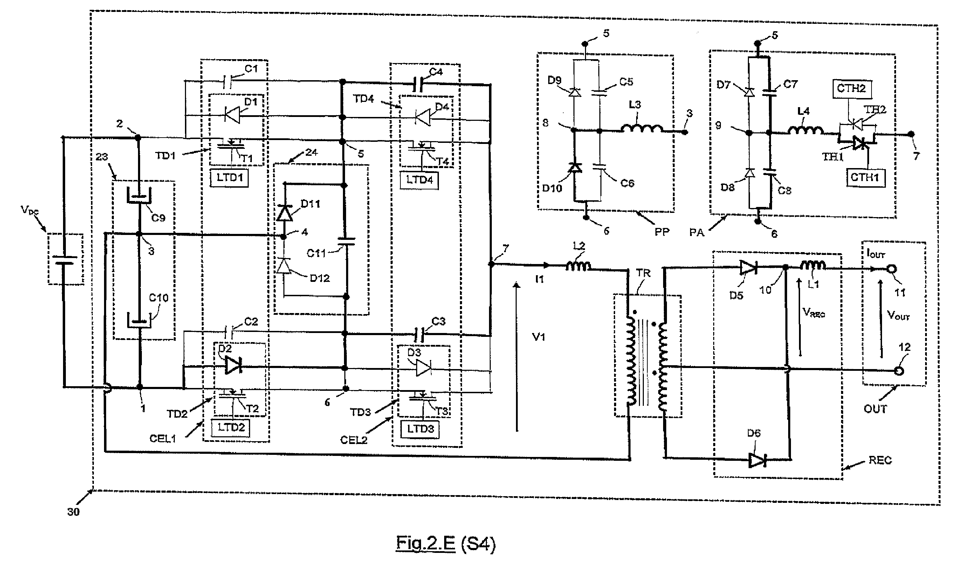

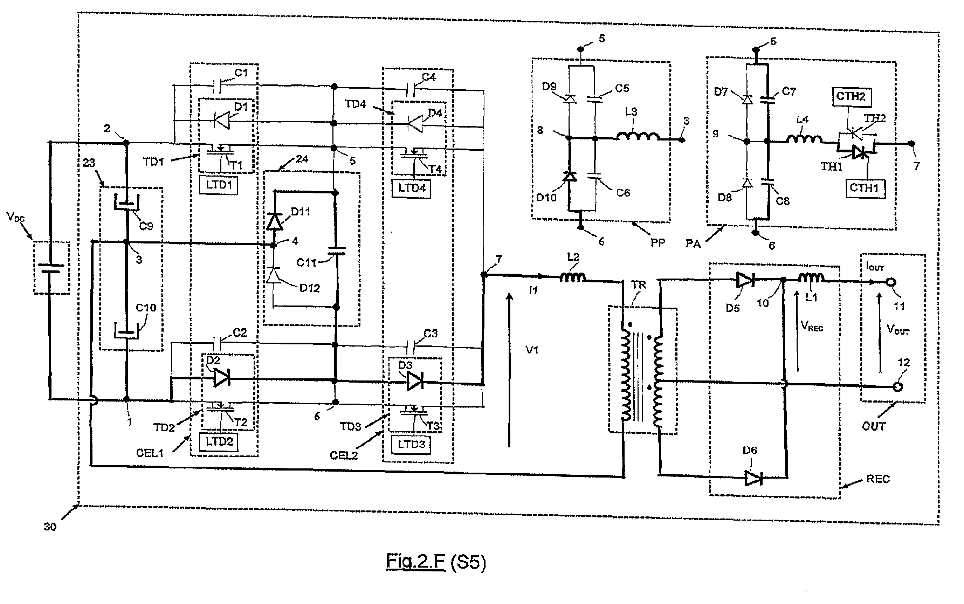

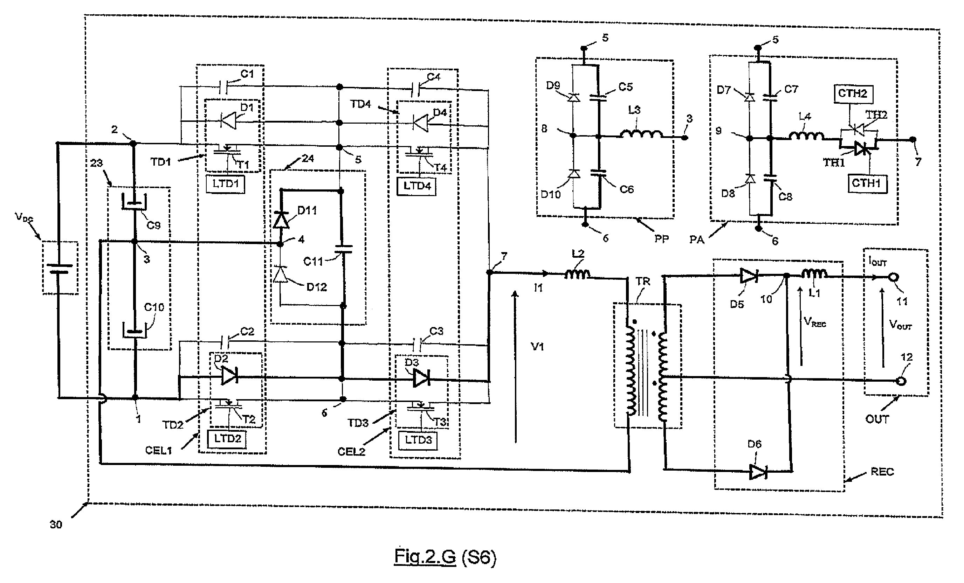

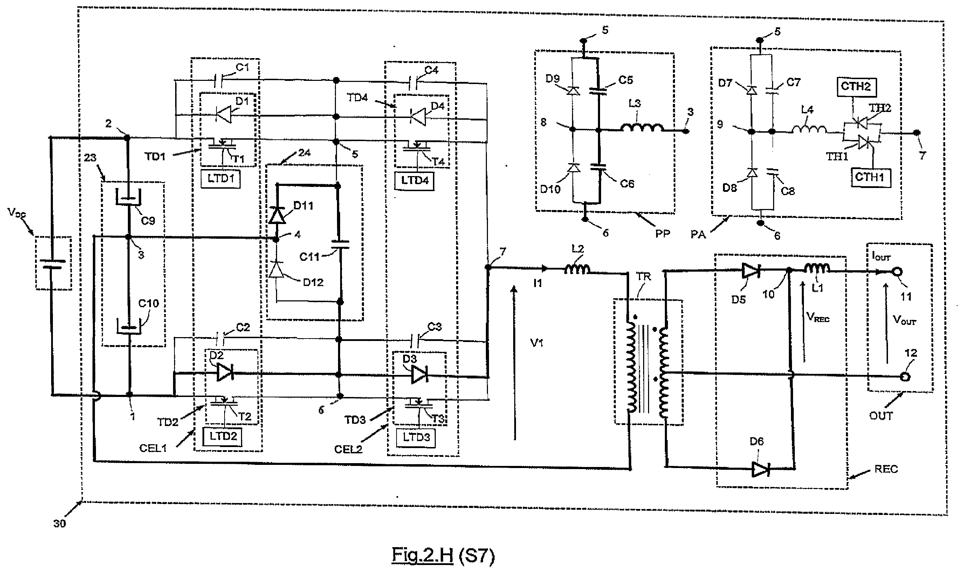

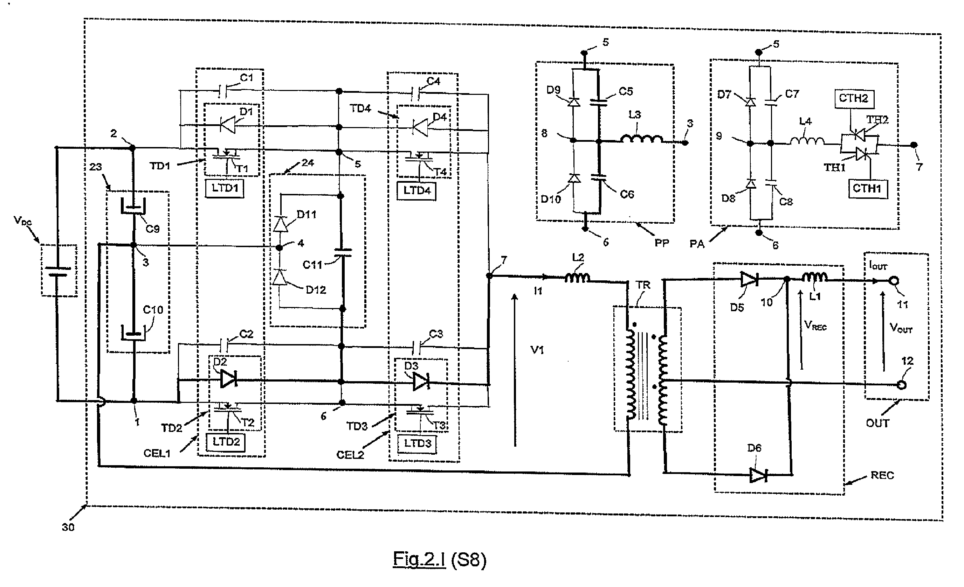

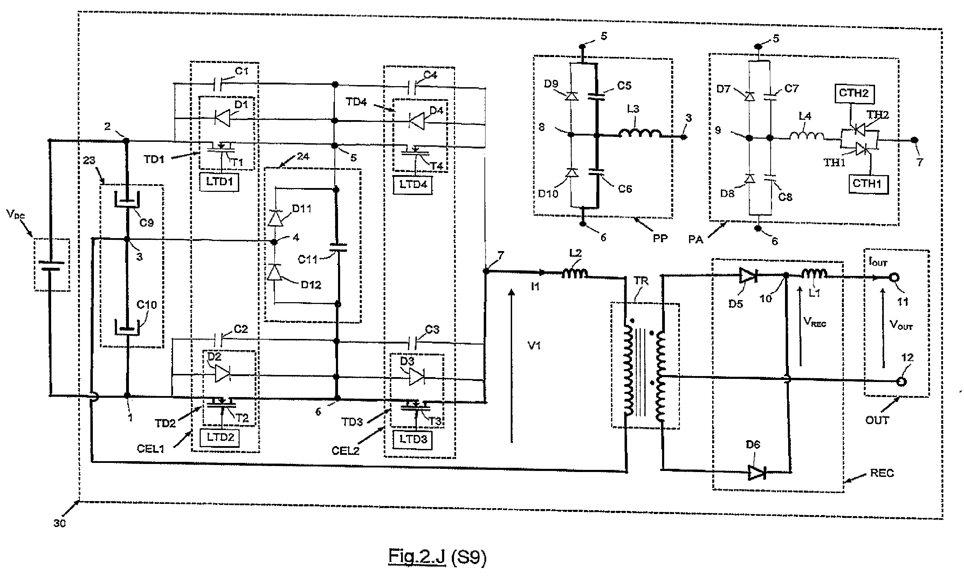

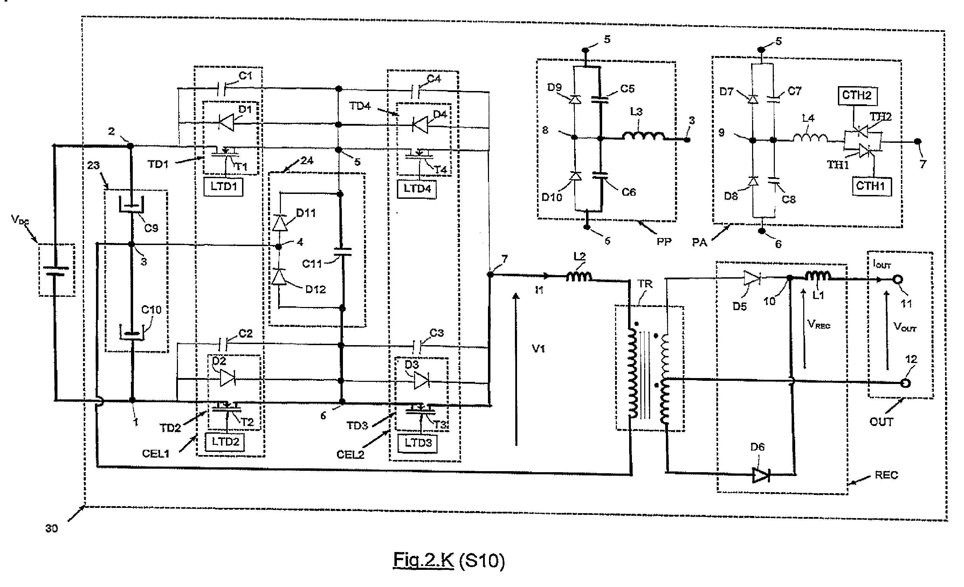

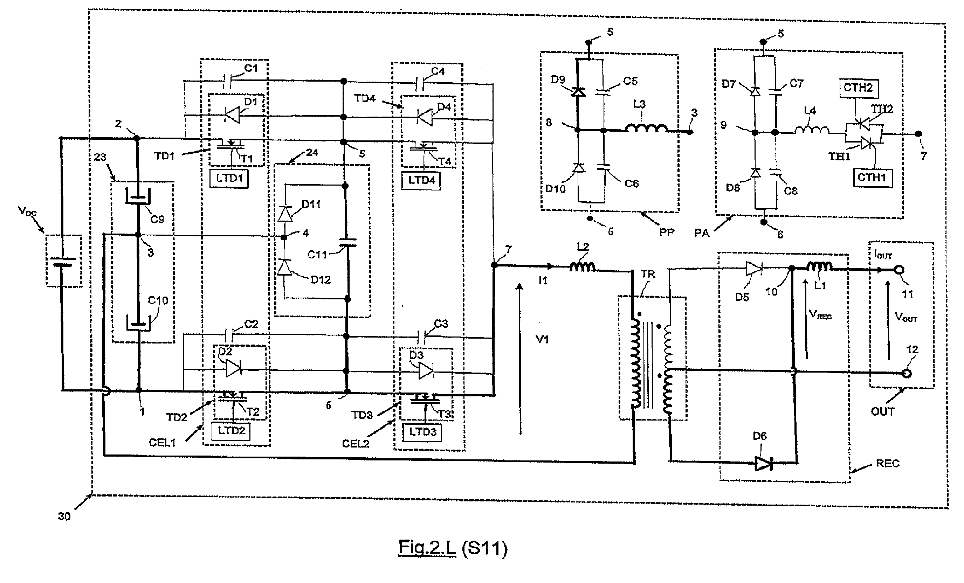

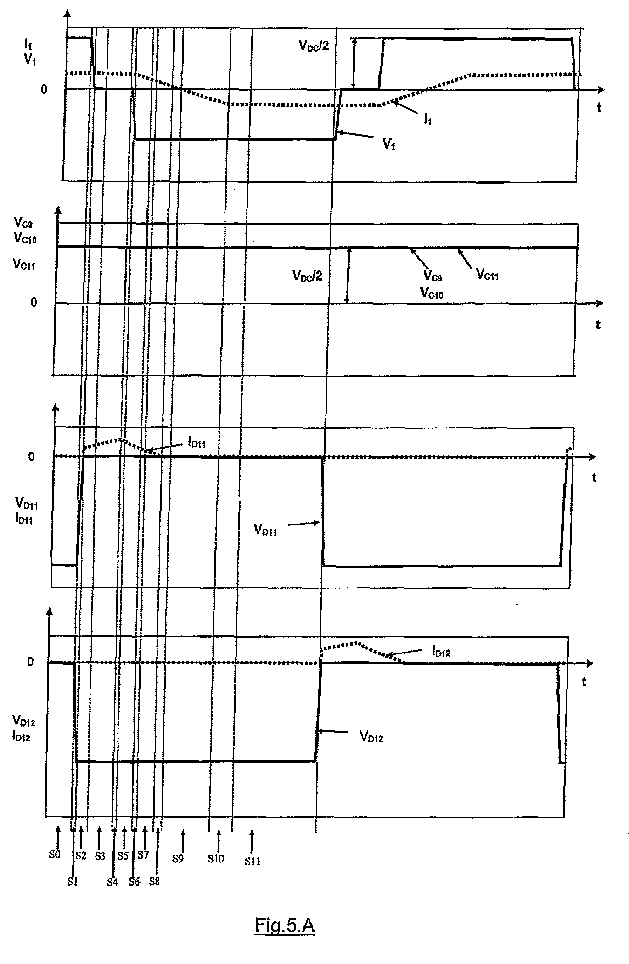

On va maintenant décrire à titre d'exemple le fonctionnement d'un circuit selon l'invention en référence à la figure 1. Le circuit étant d'un fonctionnement périodique symétrique en temps, il va être décrit sur une demi-période en référence aux séquences représentées aux figures 2.A à 2.L et aux chronogrammes des différents signaux aux figures 5A à 5.E.

Sur ces chronogrammes, la tension et l'intensité des différents composants sont représentées, référencées respectivement par les lettres V et I avec en indice le nom du composant. Les commandes de chacun des interrupteurs principaux TD et auxiliaires TH1, TH2 sont également représentées sur le chronogramme de la figure 3, un état de blocage apparaissant sous la forme d'un signal de niveau bas et un état d'amorçage sous la forme d'un signal de niveau haut, ainsi que leurs décalages temporels.

Le fonctionnement du circuit est décomposé selon douze séquences de S0 à S11.

### Séquence initiale S0 (Fig. 2.A) : phase active de transfert de puissance

Les transistors T1, T4 et la diode D5 conduisent tandis que les interrupteurs TD2, TD3 et la diode D6 sont bloqués.

L'enroulement primaire du transformateur TR voit une tension constante positive ($V_{TR} = V_{DC}/2$). Le courant dans l'inductance de filtrage de sortie L1 est ramené au primaire via la diode D5 et le transformateur TR. Le courant du transistor T1 est la somme du courant dans l'inductance de sortie L1 ramené au primaire et du courant dans l'inductance L3 du pôle de commutation.

Cette séquence prend fin, au blocage du transistor T1 par la commande.

### Séquence S1 (Fig. 2.B) : Blocage commandé du transistor T1 et phase linéaire de charge et décharge des condensateurs C1 et C2

Au début de cette séquence le transistor T1 est commandé au blocage et aucun autre changement d'état des interrupteurs n'intervient durant cet intervalle dont la durée est le temps de charge et décharge des condensateurs C1 et C2. Comme le transistor T1 est bloqué, la somme du courant dans l'inductance L2 et dans l'inductance L3 du pôle passif commence à charger le condensateur C1 et à décharge le condensateur C2 simultanément. Les tensions aux bornes des 2 interrupteurs TD1 et TD2 sont traduites, respectivement par les équations:

$$V_{TD1} = V_{C1} = \frac{V_{DC}}{2} - \frac{I_{L3} + I_1}{2\,C1}\,t \qquad V_{TD2} = V_{C2} = \frac{I_{L3} + I_1}{2\,C2}\,t$$

 t : temps courant de fonctionnement
C1, C2 : capacités des condensateurs C1 et C2
m : rapport du transformateur TR

Du fait de la présence du condensateur C1, la tension aux bornes de l'interrupteur TD1 ne peut que croître lentement, permettant le blocage à pertes réduites. En fin de charge de C1, la valeur maximale de la tension $V_{TD1}$ est de $V_{DC}/2$ (tenue en tension moitié de la tension totale $V_{DC}$).

Le condensateur C2 se décharge durant cet intervalle de temps. Dès qu'il est complètement déchargé, la diode D2 en antiparallèle avec le transistor T2 se ferme spontanément, permettant la continuité du courant. La tension aux bornes de l'interrupteur TD2 est maintenue à zéro créant les conditions d'amorçage spontané en mode zéro de tension (ZVS).

### Séquence S2 (Fig. 2. C) : Phase de roue libre sans transfert de puissance

La diode D2 étant passante, comme le transistor T4 est encore passant, l'enroulement primaire du transformateur TR voit une tension nulle après l'annulation de la tension aux bornes du condensateur C2. La tension aux bornes de la diode D6 s'annule et les 2 diodes D5 et D6 sont alors passantes dans un mode de roue libre. Le courant primaire dans le transformateur TR est maintenu constant. Le courant dans l'inductance L3 commence à croître à partir de la valeur crête négative. La durée de cette phase de roue libre est déterminée par le temps de déphasage $t_\alpha$ nécessaire au réglage du transfert de puissance.

### Séquence S3 (Fig. 2.D) : Phase de roue libre sans transfert de puissance et amorçage commandé de TH1

On amorce l'interrupteur auxiliaire TH1. Le courant dans l'inductance L4 commence à croître à partir de zéro.

Le transistor T4 voit la somme du courant primaire dans le transformateur et du courant dans l'inductance L4.

### *Séquence S4* (Fig. 2.E): *Blocage commandé de T4 et phase oscillatoire de charge/décharge des condensateurs C3 et C4*

Au début de cette séquence, le transistor T4 est commandé au blocage. Le courant $I_{L4}$ est à sa valeur crête maximale $I_{L4max}$. Aucun autre interrupteur ne change d'état durant cet intervalle. La durée de cet intervalle est le temps de charge/décharge des condensateurs C3 et C4.

De manière similairement à la séquence 1, ce courant commence à charger le condensateur C4 et à décharger le condensateur C3. La tension $V_{C4}$ commence à croître à partir de zéro tandis que $V_{C3}$ commence à décroître à partir de $V_{DC}/2$ .

Dès que la tension $V_{C3}$ commence à décroître, le transformateur commence à voir une tension négative car la diode D2 est déjà passante.

Comme cet intervalle est très court, le courant $I_{L4}$ reste presque constant à sa valeur crête $I_{L4}$max.

Comme dans la séquence 1 on trouve :

$$V_{TD3} = V_{C3} = \frac{V_{DC}}{2} - \frac{I_{L4} + I_1}{2C_3}t \qquad\qquad V_{TD4} = V_{C4} = \frac{I_{L4} + I_1}{2C_4}t$$

Grâce à l'effet du condensateur C4, la tension $V_{TD4}$ ne peut que croître lentement assurant la commutation de blocage ZVS pour l'interrupteur TD4. La valeur finale de la tension $V_{TD4}$ est de $V_{DC}/2$.

La décharge progressive de C3 ramène à zéro la tension $V_{TD3}$ pendant cet intervalle, permettant l'amorçage spontané en mode ZVS de D3.

Durant cet intervalle, le courant de l'interrupteur TD4 est égal au courant ($I_{L4} + I_1$). Mais l'ondulation de $I_1$ est à sa valeur basse (cela montre l'effet contraire de l'ondulation du courant de la charge sur ce bras lors de la commutation) et compte tenu des résistances des composants (D2 et T4), le courant primaire est amorti et n'est pas parfaitement constant durant la phase de roue libre. Ceci réduit les contraintes de courant de TD4 au blocage mais réduit aussi le courant nécessaire pour décharger le condensateur C3. Pour obtenir l'amorçage spontané de TD3, le condensateur C3 doit être totalement déchargé pendant le délai imparti (temps mort par exemple). Autrement, s'il n'est pas complètement déchargé par insuffisance du courant, l'interrupteur TD3 perdra la commutation d'amorçage spontanée.

### *Séquence S5* (Fig. 2.F): *Phase linéaire de décroissance du courant primaire*

Au début de cette séquence la diode D3 s'amorce spontanément en mode ZVS. Aucun autre changement d'état des interrupteurs n'a lieu durant cet intervalle.

Comme la diode D3 est passante, l'inductance L2 voit une tension négative constante - $V_{DC}/2$. Le courant commence à décroître linéairement suivant l'équation :

$$I_{L2} = -\frac{V_{DC}}{2L_2}t + I_{L2\,max}$$

### *Séquence S6* (Fig. 2.G): *Phase linéaire de décroissance du courant primaire et blocage de la diode D10*

La diode D10 du pôle passif se bloque et la continuité du courant est assurée par les condensateurs C5 et C6. L'instant de blocage de cette diode D10 dépend des paramètres du pôle passif L3-C5-C6.

### *Séquence S7* (Fig. 2.H): *Phase linéaire de décroissance du courant primaire et blocage spontané de TH1*

L'interrupteur auxiliaire TH1 se bloque spontanément en mode ZCS. Le courant primaire continue à décroître linéairement.

Cette séquence dépend des paramètres du circuit L4-C7-C8 et du temps $t_r$ d'avance de phase de commande des interrupteurs auxiliaires TH1 et TH2.

*Séquence S8* **(Fig. 2.I)**: *Phase linéaire de décroissance du courant primaire et blocage spontané de la diode D11*

La diode D11 se bloque spontanément du fait de l'annulation du courant qui la traverse.

*Séquence S9* **(Fig. 2.J)**: *Phase linéaire d'inversion du courant primaire*

Les diodes D2 et D3 se bloquent spontanément lorsque le courant primaire s'annule. La continuité du courant est assurée par les transistors T2 et T3, s'ils sont déjà commandés à l'amorçage (ce qui est le cas suivant le chronogramme de commande).

*Séquence S10* **(Fig. 2.K)**: *Blocage de la diode secondaire D5*

La diode secondaire D5 se bloque spontanément lorsque le courant primaire $I_{L2}$ a atteint le courant imposé par la charge.

*Séquence S11* **(Fig. 2.L)**: *Amorçage spontané de D9*

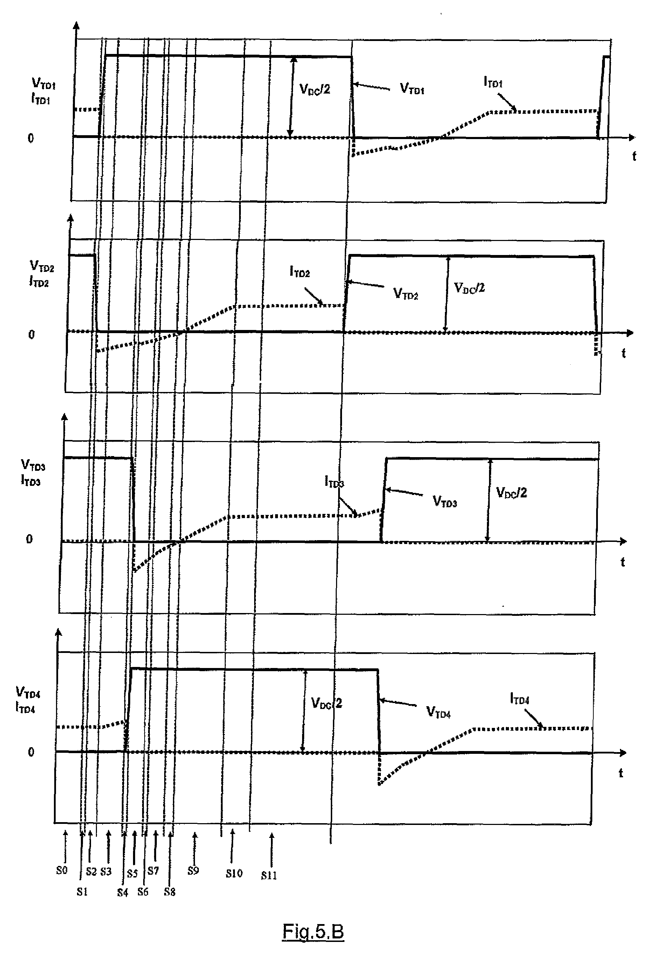

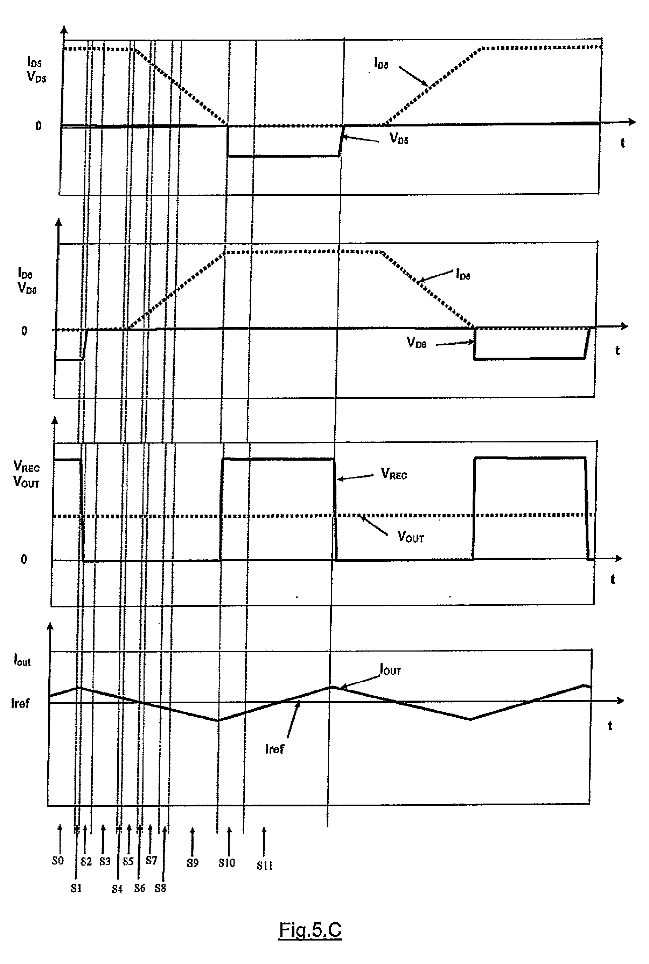

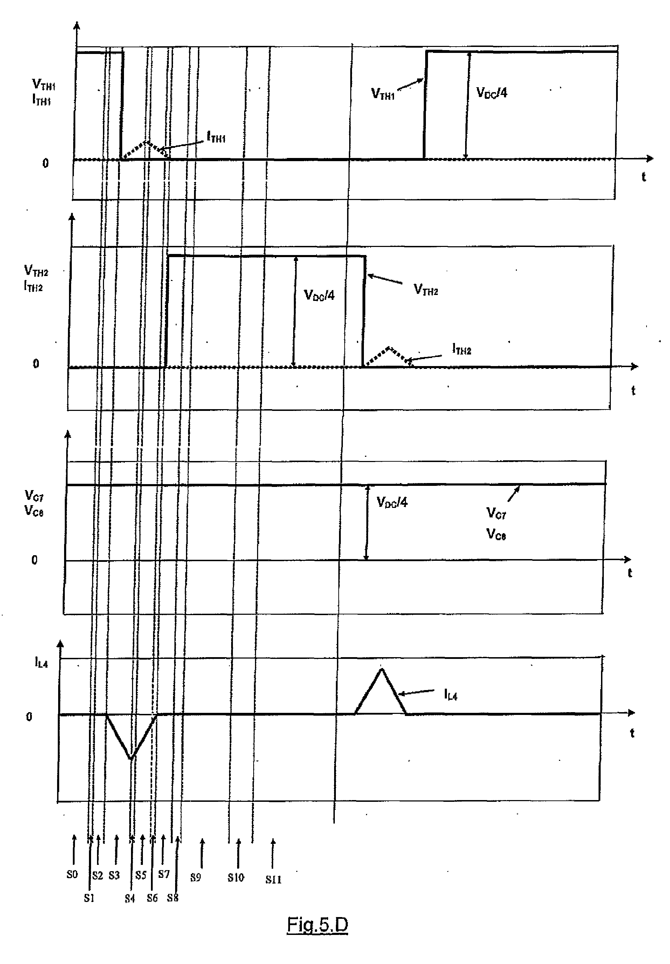

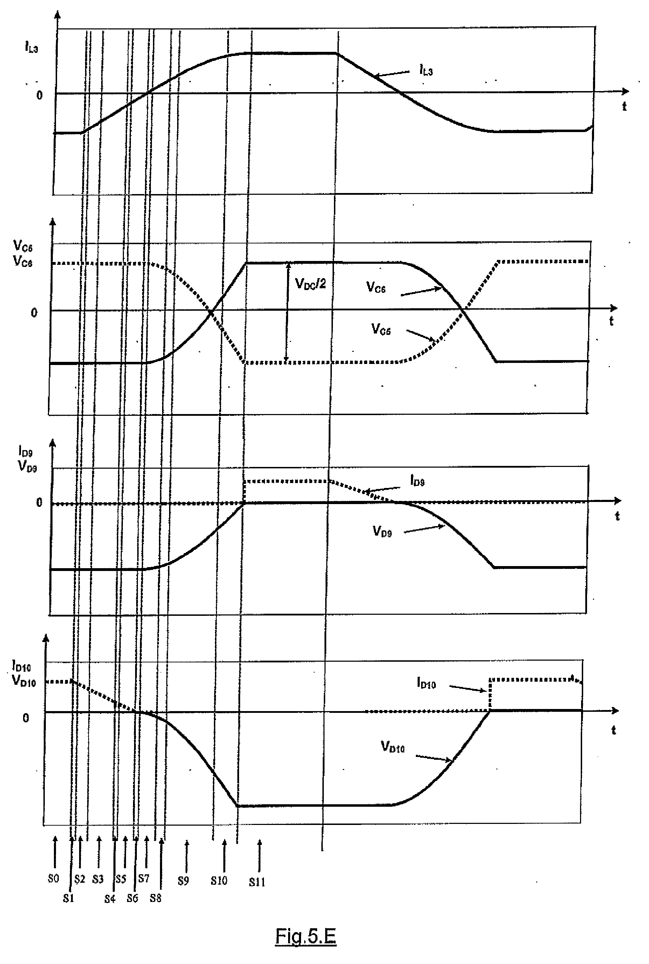

La diode D9 du pôle passif s'amorce spontanément à l'annulation de la tension aux bornes du condensateur C5.
Cette séquence dépend des paramètres du circuit L3-C5-C6.
Les transistors T2 et T3 sont passant et T1 et T4 bloqués. La diode D9 est passante et D10 est bloquée. Cette séquence est symétrique à la séquence initiale.
Un autre cycle de fonctionnement symétrique aux 12 séquences précédentes commence et le convertisseur répète par la suite périodiquement le processus de fonctionnement.
On va maintenant décrire le fonctionnement du pôle actif de l'exemple en montrant la synchronisation des commandes CTH des interrupteurs auxiliaires TH1 et TH2 avec les commandes LTD des interrupteurs principaux TD.
L'interrupteur auxiliaire TH1 (respectivement TH2) est amorcé avec une avance de phase $t_r$ avant le blocage du transistor T4 (respectivement T3). Cette avance de phase et la valeur de la self L4 détermine la durée et la valeur crête de l'impulsion de courant envoyée à l'interrupteur principal TD4 pour commuter à zéro de tension.
Le fonctionnement du circuit et les formes d'onde dans les différents éléments sont montrés à la figure 5.D pour la commutation de l'interrupteur TD4. On suppose que les condensateurs C7 et C8 sont de valeurs importantes (par exemple de l'ordre de 10 $\mu$F) pour avoir des tensions quasi constantes à leurs bornes lors des commutations.
Initialement le courant primaire dans le transformateur TR est supposé positif et circule dans le transistor T4. Pour démarrer le processus de commutation, l'interrupteur auxiliaire TH1 est commandé à l'amorçage. Une tension de $\dfrac{V_{DC}}{4}$ st appliquée aux bornes de l'inductance L4 et le courant dans celle-ci croît linéairement avec une pente : $\dfrac{V_{DC}}{4\,L4}$. Durant ce temps, le transistor T4 reste passant.
Quand le courant dans l'inductance L4 atteint sa valeur crête maximale déterminée par le temps $t_r$ et la valeur de l'inductance L4, le transistor T4 est commandé au blocage. Une phase de résonance commence et le condensateur C4 se charge, tandis que C3 se décharge.
Quand la tension aux bornes du condensateur C3 passe par zéro, la diode D3 s'amorce spontanément. Le transistor T3 peut maintenant être amorcé sous tension nulle. Une fois que la diode D3 conduit, le courant dans l'inductance L4 décroît jusqu'à zéro avec une pente $-\dfrac{V_{DC}}{4\,L4}$. A partir de cet instant, l'interrupteur auxiliaire TH1 se bloque à zéro de courant (mode ZCS). Le pic de courant maximal dans l'inductance L4 est donné par :

$$I_{L4\,max} = \frac{t_r}{4}\frac{V_{DC}}{L4} \quad (t_r : \text{temps d'avance de phase de la commande du thyristor}$$

TH1 par rapport à la commande de blocage du transistor T4)

Le temps total de commutation est donné par :

$$t_c = 2\,t_r$$

A fort courant de charge, l'énergie stockée dans l'inductance L2 peut être suffisante pour commuter à zéro de tension les interrupteurs TD3 et TD4. Dans ce cas, les commandes des interrupteurs auxiliaires TH1 et TH2 peuvent être inhibées. Ceci permet d'annuler totalement les pertes par conduction supplémentaires dues à ce pôle actif.

Nous allons maintenant montrer les particularités fonctionnelles du pôle passif écrêté de l'exemple, constitué par les éléments L3, C5, C6, D9 et D10.

La forme du courant est oscillatoire avec une portion plate dont la durée dépend des valeurs des éléments L3, C5 et C6 et de la fréquence de fonctionnement F de l'onduleur. Les tensions aux bornes des condensateurs C5 et C6 sont discontinues et varient entre 0 et la tension d'alimentation $V_{DC}/2$.

La fréquence propre du circuit résonant est donnée par :

$$f_p = \frac{1}{2\pi\sqrt{2\ C56\ L3}} = \frac{\omega_p}{2\pi}$$

Avec C56 = C5 = C6 (valeur des condensateurs du pôle passif). Les valeurs des condensateurs C5 et C6 sont identiques.

On notera $\alpha_f$ le rapport entre la fréquence de fonctionnement de l'onduleur et la fréquence propre du pôle passif, soit :

$$\alpha_f = \frac{f_p}{F}$$

L'amplitude crête est donnée par l'expression :

$$I_{L3\,max} = C56\ V_{DC}\left(2\pi\ f_p\right) = V_{DC}\ C56\ \omega_p$$

Pour un même pic de courant $I_{L3max}$, la durée de la portion plate due à l'écrêtage est une fonction de $\alpha_f$ avec :

$$L3 = \frac{V_{DC}\ /\ I_{L3\,max}}{4\pi\ \alpha_f\ f_c} = \frac{V_{DC}\ /\ I_{L3\,max}}{\omega_p} \quad \text{et} \quad 2\ C56 = \frac{I_{L3\,max}\ /\ V_{DC}}{4\ \pi\ \alpha_f\ f_c} = \frac{I_{L3\,max}\ /\ V_{DC}}{\omega_p}$$

Le courant minimum du pôle pour obtenir la commutation douce à zéro de tension est donné par:

$$I_{L3\,min} = V_{DC}\sqrt{2\ C34\ /\ L2}\ ,\ \text{avec}\ C34\ = C3\ = C4$$

Pour une commande avec des variations de déphasage raides, une portion de palier suffisamment plat est nécessaire pour conserver le même niveau de courant crête.

Nous allons maintenant décrire le principe de commande à logique thyristor dual de l'exemple. Le but de ce pilotage est de fiabiliser l'onduleur et de résoudre le problème de gestion du temps mort entre les interrupteurs d'une même cellule en rendant naturellement complémentaires les commutations.

Ce pilotage est caractérisé en ce qu'il comporte un circuit de détection de la tension entre les électrodes de puissance de chaque interrupteur de l'onduleur délivrant des signaux de tension et un circuit de pilotage recevant lesdits signaux de commande émis par le circuit de commande ainsi que lesdits signaux de tension et adapté pour délivrer à chacun des interrupteurs un signal de pilotage correspondant à un ordre de blocage lorsque ledit signal de commande correspond à un ordre de blocage et/ou lorsque la tension entre les électrodes de puissance est sensiblement différente de zéro et correspondant à une autorisation d'amorçage lorsque ledit signal de commande correspond à une autorisation d'amorçage et que la tension entre les électrodes de puissance est sensiblement nulle.

Selon le mode de réalisation décrit à la Fig.4, la source de puissance comprend un dispositif de commande 50 extérieur à l'onduleur 30 et adapté pour une commande forcée de blocage des interrupteurs TD et leur amorçage spontané. Chacun des interrupteurs TD recevant un signal LTD1, LTD2, LTD3 et LTD4 véhiculant des commandes de blocage ou des autorisations d'amorçage.

Les signaux de commande LTD des interrupteurs TD d'une même cellule sont complémentaires l'un de l'autre et sans temps mort entre eux, et les signaux de commande de deux interrupteurs opposés d'une diagonale sont déphasés pour le réglage du transfert de puissance.

Ainsi, les signaux LTD1 et LTD2 sont complémentaires, de même que les signaux LTD3 et LTD4, et les signaux LTD1 et LTD4 sont déphasés, de même que les signaux LTD2 et LTD3. En particulier, les signaux LTD1 et LTD2 sont en arrière de phase par rapport aux signaux LTD3 et LTD4.

Chacun des circuits LTD comporte un dispositif 53, connecté entre les bornes des interrupteurs TD, de manière à comparer la tension aux bornes des interrupteurs TD par rapport à une référence Vref voisine de zéro.

Pour chaque circuit de détection 53, le générateur de tension de référence Vref est intercalé entre une borne d'entrée du comparateur 54 et une borne d'un interrupteur TD.

Cette tension de référence est faible par rapport à la tension maximale pouvant apparaître entre les électrodes de puissance d'un interrupteur TD, par exemple de l'ordre de 17V.

Ainsi, chaque circuit 53 permet la détection d'une tension nulle ou quasi nulle, aux bornes d'un interrupteur TD. La détection d'une telle tension se traduit par l'émission d'un signal de tension St qui est dans un état logique haut lorsque la tension aux bornes de l'interrupteur TD correspondant est nulle voire quasi nulle et dans un état logique bas le reste du temps.

Le dispositif comporte également un étage supplémentaire de commande formé d'un circuit de pilotage 52 intercalé entre le dispositif de commande PWM et les interrupteurs TD. Ce circuit 52 reçoit en entrée les signaux de commande Sc émis par le dispositif de commande PWM ainsi que les signaux de tension St émis par le circuit de détection de la tension aux bornes de l'interrupteur TD.

Dans le mode de réalisation décrit, le circuit de pilotage LTD comprend plusieurs unités logiques 50 conçues pour réaliser, pour chaque interrupteur TD, une fonction logique ET entre son signal de commande Sc et son signal de tension St et délivrer un signal de pilotage LTD à l'interrupteur TD correspondant.

Dans le mode de réalisation décrit, le signal de pilotage LTD est directement applicable à chacun des interrupteurs TD.

En fonction de la nature des interrupteurs TD, un circuit d'adaptation peut être intercalé entre la sortie des unités logiques 52 et des interrupteurs TD afin de permettre la génération d'un signal de pilotage adapté aux interrupteurs.

En fonctionnement, les signaux de commande Sc délivrés par le dispositif de commande PWM, possèdent deux niveaux correspondant à un état logique haut pour un ordre d'amorçage et un état logique bas pour un ordre de blocage.

Le circuit de pilotage 52 transmet donc un ordre de blocage en délivrant à chaque interrupteur TD, un signal de pilotage LTD de niveau logique bas lorsqu'il a reçu un signal de commande Sc d'un même niveau logique et/ou lorsque la différence de potentiel aux bornes de l'interrupteur TD est supérieure à la tension de référence générée par le générateur 53, c'est-à-dire lorsque le signal St est à un niveau bas.

Les ordres de blocage émis par le dispositif de commande LTD sont donc directement transmis aux interrupteurs.

Au contraire, une autorisation d'amorçage correspondant à un signal de commande $S_C$ à haut niveau logique haut, ne sera transmise que lors de la détection d'une tension nulle ou quasi nulle aux bornes de l'interrupteur correspondant, c'est-à-dire lorsque le signal St de détection de tension est également à un niveau haut.

Le dispositif permet donc de s'assurer que les interrupteurs TD de l'onduleur 30 reçoivent une autorisation d'amorçage émise par le dispositif de commande LTD uniquement lorsque la tension à leurs bornes est nulle ou quasi nulle.

L'application d'un tel circuit de pilotage à l'onduleur 30, permet ainsi

- d'éviter une décharge brutale des condensateurs C dans les interrupteurs TD, évitant ainsi des pertes supplémentaires dans ces interrupteurs et des problèmes de perturbations électromagnétiques (CEM) ;
- d'empêcher un court-circuit sur une cellule de commutation de l'onduleur par l'absence de commande d'amorçage forcée, augmentant ainsi la fiabilité.

De plus, le rendement global de l'onduleur est amélioré grâce à la suppression ou, tout au moins, la diminution des temps morts obligatoires entre les commandes d'amorçage et les commandes de blocage existant dans les onduleurs de l'état de la technique, la commande d'un tel onduleur étant ainsi simplifiée.

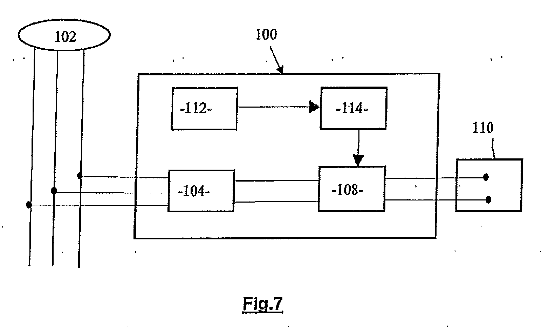

En référence à la figure 7, on va maintenant décrire un exemple de poste de soudage à l'arc à onduleur selon l'invention.

Le poste de soudage 100 est relié à un réseau de transfert d'énergie électrique, par exemple un réseau triphasé 102. Ce réseau triphasé 102 délivre des tensions alternatives à un redresseur classique ou un PFC (Power Factor Corrector) 104 formant une source de tension continue à laquelle vient se raccorder un onduleur 108 correspondant à l'onduleur 30 tel que décrit en référence à la figure 1. Le redresseur 104 et l'onduleur 108 ainsi combinés forment un convertisseur de puissance entre une source de tension alternative et une source de tension continue et réciproquement.

Les bornes de sortie de l'onduleur 108 sont raccordées à des bornes 110 formant les bornes de soudage pour la réalisation d'une soudure à l'arc.

Par ailleurs, le poste de soudage 100 comporte également des moyens 112 d'entrée d'une consigne pour le soudage. Cette consigne est transmise à un dispositif de commande 114 correspondant aux dispositifs de commande LTD et CTH décrits en référence à la figure 1. Le dispositif de commande 114 délivre enfin des signaux de commande à l'onduleur 108 pour la formation d'un signal de sortie aux bornes 110, correspondant à la consigne.

Bien entendu, différents types de consignes peuvent être envisagés en fonction des applications souhaitées. En particulier, on peut utiliser l'onduleur de l'invention dans un poste de soudage à l'arc à courant lisse ou pulsé.

Enfin, bien que l'invention ait été décrite dans le cadre du soudage, il est également possible d'utiliser l'onduleur de l'invention dans d'autres domaines d'applications, par exemple la charge de batteries rechargeables ou les alimentations stabilisées courantes.

L'onduleur de l'invention présente un nombre important d'avantages par rapport aux postes à onduleurs existants, notamment :

- la réduction des contraintes en tension aux bornes des composants, en particulier aux bornes des interrupteurs principaux TD (chaque interrupteur supporte la moitié de la tension du bus continu $V_{DC}$) cet avantage permet d'utiliser l'onduleur dans des applications nécessitant des bus continu à tension élevée et/ou d'utiliser des interrupteurs bas calibres de meilleurs caractéristiques électriques et plus économiques ;
- un équilibrage naturel des tensions aux bornes de tous les composants et une répartition équitable des courants qui les traversent ;
- la réduction des pertes par commutation dans les interrupteurs, permettant d'accéder aux hautes fréquences de commutation, qui autorisent elles mêmes une réduction du poids, du volume et du coût des éléments (transformateur, inductances, dissipateurs... etc),
- la réduction des perturbations électromagnétiques,
- le fonctionnement en commutation douce sur toute la plage de variation du courant de soudage (du vide au court-circuit),
- la réduction des pertes par commutation dans les interrupteurs auxiliaires dans les pôles grâce au pilotage de la largeur des impulsions des signaux de commande CTH1 et CTH2;
- la réduction des pertes par conduction supplémentaires dues aux pôles de commutation ;
- l'utilisation des interrupteurs à semi-conducteurs dans des conditions de commutation favorables : MOSFET en mode ZVS (blocage de la diode intrinsèque à zéro de tension) et IGBT en mode ZCS (annulation des pertes dues au traînage du courant de queue), favorisant ainsi l'augmentation de la fréquence de fonctionnement ;
- une grande sûreté de fonctionnement grâce à la logique thyristor dual : pas de gestion de temps morts et, en cas de commande erronée ou de non fonctionnement en commutation douce, l'onduleur s'arrête naturellement

## Revendications

1. Onduleur (30) de type multi niveaux, à commutation douce quasi-résonante, comprenant :

   - des moyens (1, 2) de raccordement à une source d'alimentation ($V_{DC}$) en énergie électrique ;
   - une première cellule de commutation (CEL1) comportant un premier et un second interrupteur (TD1, TD2) et une seconde cellule de commutation (CEL2) comportant un troisième et un quatrième interrupteur (TD3, TD4), lesdits quatre interrupteurs étant commandés par des dispositifs (LTD1, LTD2, LTD3, LTD4) délivrant des signaux suivant une logique à thyristor dual ;
   - un dispositif de transformation de tension (TR, L2) ;
   - un pôle de commutation passif (PP) associé à ladite première cellule de commutation (CEL1);
   - un pôle de commutation actif (PA) associé à ladite seconde cellule de commutation (CEL2) ; et
   - un diviseur de tension (23) connecté en parallèle avec ladite source d'alimentation ($V_{DC}$) et comprenant au moins deux éléments capacitifs (C9, C10) en série définissant un premier point milieu (3) ;
   **caractérisé en ce que** ladite source d'alimentation ($V_{DC}$) est connectée à une borne (2) dudit premier interrupteur (TD1), lui-même connecté en série par son autre borne (5) constituant un second point milieu (5) audit quatrième interrupteur (TD4), lui-même connecté en série par un troisième point milieu (7) audit troisième interrupteur (TD3), lui-même connecté en série par un quatrième point milieu (6) à une borne (6) dudit second interrupteur (TD2), lui-même connecté par son autre borne (1) à ladite source d'alimentation ($V_{DC}$).

**2.** Onduleur (30) selon la revendication 1, **caractérisé en ce que** :

- ledit onduleur (30) comporte un dispositif d'équilibrage (24) comprenant au moins un condensateur flottant (C11) et connecté à au moins deux points pris parmi lesdits premier, second et quatrième points milieu (3, 5, 6) ;
- ledit pôle de commutation passif (PP) est connecté aux premier, second et quatrième points milieu (3, 5, 6) ;
- ledit pôle de commutation actif (PA) est connecté aux second, troisième et quatrième points milieu (5, 7, 6) ; et
- lesdits premier et troisième points milieu (3, 7) sont connectés avec ledit dispositif de transformation de tension (TR, L2).

**3.** Onduleur (30) selon l'une quelconque des revendications 1 ou 2, **caractérisé en ce que** ledit pôle de commutation passif (PP) comporte :

- un diviseur capacitif comprenant deux éléments capacitifs (C5, C6) disposés en série entre lesdits second et quatrième points milieu (5, 6);
- une borne intermédiaire d'alimentation (8) prise entre ces deux éléments capacitifs (C5, C6), reliée audit premier point milieu (3) par l'intermédiaire d'un élément inductif (L3) et dont le potentiel varie entre zéro et les potentiels desdits second et quatrième points milieu (5, 6); et
- deux diodes (D9, D10) montées en série entre lesdits second et quatrième points milieu (5, 6) et en parallèle avec chaque élément capacitif (C5, C6).

**4.** Onduleur (30) selon l'une quelconque des revendications 1 à 3, **caractérisé en ce que** ledit pôle de commutation actif (PA) comporte :

- un diviseur capacitif formé de deux éléments capacitifs (C7, C8), disposés en série entre lesdits second et quatrième points milieu (5, 6);
- une borne intermédiaire d'alimentation (9) prise entre ces deux éléments capacitifs (C7, C8) et reliée audit troisième point milieu (7) par l'intermédiaire d'un élément inductif (L4) en série avec un montage tête-bêche d'un premier et d'un second interrupteurs (TH1, TH2) connectés à un premier et un second dispositifs de commande (CTH1, CTH2) ; et
- deux diodes (D7, D8) montées en série entre lesdits second et quatrième points milieu (5, 6) et en parallèle avec chaque élément capacitif (C7, C8).

**5.** Onduleur (30) selon l'une quelconque des revendications 2 à 4, **caractérisé en ce que** ledit dispositif d'équilibrage (24) comprenant au moins un condensateur flottant (C11) comprend au moins deux diodes (D11, D12) et est connecté au moins aux premier, second et quatrième points milieu (3, 5, 6).

**6.** Onduleur (30) selon l'une quelconque des revendications 1 à 5, **caractérisé en ce que** lesdits dispositifs de commande (LTD) des interrupteurs (TD) des cellules de commutation (CEL1, CEL2) comportent chacun :

- un dispositif de commande (PWM) délivrant des signaux de commande (Sc) correspondant à des ordres d'amorçage ou de blocage ;
- un circuit (53) de détection de la tension entre les électrodes de puissance de chaque interrupteur (TD) délivrant des signaux de tension (St) à deux états logiques comprenant un état haut correspondant à une tension entre les électrodes de puissance sensiblement nulle et un état bas correspondant à une tension sensiblement différente de zéro, et
- un circuit de pilotage (52) recevant lesdits signaux de commande (Sc) et de tension (St) et délivrant à chacun des interrupteurs (TD) des cellules de commutation (CEL) un signal de pilotage (LTD) correspondant à un ordre de blocage lorsque ledit signal de commande (Sc) correspond à un ordre de blocage et/ou lorsque la tension entre les électrodes de puissance est sensiblement différente de zéro, ou correspondant à une autorisation d'amorçage lorsque ledit signal de commande (Sc) correspond à un ordre d'amorçage et que la tension entre les électrodes de puissance est sensiblement nulle.

**7.** Onduleur (30) selon l'une quelconque des revendications 1 à 6, **caractérisé en ce que** lesdits interrupteurs (TD1, TD2, TD3, TD4) des cellules de commutation (CEL1, CEL2) sont de type MOSFET et pilotés en mode thyristor dual et que les interrupteurs (TH1, TH2) dudit pôle de commutation actif (PA) sont de type IGBT et pilotés en mode thyristor.

**8.** Onduleur (30) selon l'une quelconque des revendications 1 à 7, **caractérisé en ce qu'**un élément capacitif (C1, C2, C3, C4) est connecté en parallèle de chacun des interrupteurs (TD1, TD2, TD3, TD4) des cellules de commutation (CEL1, CEL2) et que les deux interrupteurs (TD1, TD2 ou TD3, TD4) de chaque cellule de commutation (CEL1, CEL2) sont commandés de manière complémentaire l'un par rapport à l'autre et sans temps mort.

9. Onduleur (30) tel que défini par l'une quelconque des revendications 1 à 8, **caractérisé en ce que** lesdits dispositifs de commande (LTD1, LTD2) des interrupteurs (TD1, TD2) de ladite première cellule de commutation (CEL1) délivrent des signaux de commande en avance d'une durée donnée ($t_\alpha$) par rapport aux signaux délivrés par lesdits dispositifs de commande (LTD3, LTD4) des interrupteurs (TD3, TD4) de ladite seconde cellule de commutation (CEL2).

10. Onduleur (30) tel que défini par l'une des revendications 1 à 9, **caractérisé en ce que** les dispositifs de commande (CTH1, CTH2) dudit pôle de commutation actif (PA) et les dispositifs de commande (LTD3, LTD4) des interrupteurs (TD3, TD4) de ladite seconde cellule de commutation (CEL2) délivrent des signaux de commande synchronisés de la manière suivante :

    - l'ordre d'amorçage transmis par ledit premier dispositif de commande (CTH1) dudit premier interrupteur (TH1) du pôle de commutation actif (PA) est en avance d'une durée donnée, ou temps d'avance ($t_r$), sur l'ordre de blocage transmis par ledit dispositif de commande (LTD4) dudit quatrième interrupteur (TD4) ;
    - la durée du signal de commande (CTH1) dudit premier interrupteur (TH1) du pôle de commutation actif (PA) est supérieure ou égale à deux fois ledit temps d'avance ($t_r$), et inférieure à une demi-période de fonctionnement ;
    - l'ordre d'amorçage transmise par le dispositif de commande (CTH2) dudit second interrupteur (TH2) du pôle de commutation actif (PA) est également en avance d'une durée égale audit temps d'avance ($t_r$) sur l'ordre de blocage transmise par ledit dispositif de commande (LTD3) dudit troisième interrupteur (TD3) ; et
    - la durée du signal de commande (CTH2) dudit second interrupteur (TH2) du pôle de commutation actif (PA) est supérieure ou égale à deux fois ledit temps d'avance ($t_r$) et inférieure à une demi-période de fonctionnement.

11. Poste de soudage à l'arc, **caractérisé en ce qu'**il comporte au moins un onduleur tel que défini par l'une quelconque des revendications 1 à 10.

12. Poste de soudage à l'arc selon la revendication 11, **caractérisé en ce qu'**il comporte en outre :

    - une source de tension continue (104) reliée audit au moins un onduleur (108) dont les bornes de sortie (110) forment des bornes de soudage ;
    - un dispositif de commande associé (114) ; et
    - des moyens (112) d'entrée d'une consigne de soudage reliés audit dispositif (114) de commande dudit au moins un onduleur (108).

13. Procédé de contrôle d'un onduleur selon l'une quelconque des revendications 1 à 10 ou d'un poste de soudage selon l'une quelconque des revendications 10 ou 11, délivrant une puissance donnée, **caractérisé en ce que** ladite puissance délivrée est augmentée ou diminuée, respectivement, en réduisant ou en augmentant, respectivement, l'avance ($t_\alpha$) des signaux délivrés par les dispositifs de commande (LTD1, LTD2) de ladite première cellule de commutation (CEL1) par rapport aux signaux délivrés par les dispositifs de commande (LTD3, LTD4) de ladite seconde cellule de commutation (CEL2).

Fig.1

EP 2 288 013 A1

Fig.2.A (S0)

Fig.2.B (S1)

Fig.2.C (S2)

Fig.2.D (S3)

EP 2 288 013 A1

Fig.2.E (S4)

**Fig.2.F (S5)**

Fig.2.G (S6)

Fig.2.H (S7)

Fig.2.I (S8)

24

Fig.2.J (S9)

Fig.2.K (S10)

EP 2 288 013 A1

Fig.2.L (S11)

EP 2 288 013 A1

Fig.3

Fig.4

Fig.5.A

Fig.5.B

Fig.5.C

Fig.5.D

Fig.5.E

Fig.6.A

34

Fig.6.B

**Fig.7**

Fig.8

Fig.9

Fig.10

Europäisches
Patentamt

European
Patent Office

Office européen
des brevets

**RAPPORT DE RECHERCHE EUROPEENNE**

Numéro de la demande

EP 10 16 7312

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| Y | EP 1 571 752 A (DAIHEN CORP [JP]) 7 septembre 2005 (2005-09-07) * alinéa [0001] * * alinéas [0021] - [0024] * * figure 1 * ----- | 1-13 | INV. H02M7/523 H02M7/5387 B23K9/10 |
| Y | GB 1 467 447 A (WESTINGHOUSE BRAKE & SIGNAL) 16 mars 1977 (1977-03-16) * figure 1 * ----- | 1-13 | |
| A | JP 2005 130612 A (UBE MACHINERY CORP LTD; T & U ELECTRONICS CO LTD) 19 mai 2005 (2005-05-19) * abrégé * ----- | 1-13 | |
| A | JP 7 337022 A (TOYO ELECTRIC MFG CO LTD) 22 décembre 1995 (1995-12-22) * abrégé * ----- | 1-13 | |

DOMAINES TECHNIQUES
RECHERCHES (IPC)

H02M
B23K

Le présent rapport a été établi pour toutes les revendications

| Lieu de la recherche | Date d'achèvement de la recherche | Examinateur |
|---|---|---|
| Munich | 18 janvier 2011 | Roider, Anton |

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons

........................................................................................

& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 10 16 7312

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

18-01-2011

| Document brevet cité<br>au rapport de recherche | | Date de<br>publication | Membre(s) de la<br>famille de brevet(s) | | Date de<br>publication |
|---|---|---|---|---|---|
| EP  1571752 | A | 07-09-2005 | CA<br>CN<br>JP<br>JP<br>KR<br>US | 2498630  A1<br>1663728  A<br>4597626  B2<br>2005279774  A<br>20060043269  A<br>2005190583  A1 | 01-09-2005<br>07-09-2005<br>15-12-2010<br>13-10-2005<br>15-05-2006<br>01-09-2005 |
| GB  1467447 | A | 16-03-1977 | AUCUN | | |
| JP  2005130612 | A | 19-05-2005 | AUCUN | | |
| JP  7337022 | A | 22-12-1995 | JP | 2803069  B2 | 24-09-1998 |

EPO FORM P0460

Pour tout renseignement concernant cette annexe : voir Journal Officiel de l'Office européen des brevets, No.12/82